# EUROPEAN PATENT APPLICATION

(11) **EP 3 574 866 A1**
(43) Date of publication of application: **04.12.2019**
(21) Application number: 17893855.1
(22) Date of filing: 06.04.2017
(51) Int. Cl.: A61C 8/00

(54) **DENTAL IMPLANT**

(30) Priority: 27.01.2017 RU 2017102870
(71) Applicant: Chernovol, Nikita Sergeevich, St. Petersburg 194354 (RU)
(72) Inventor: Chernovol, Nikita Sergeevich, St. Petersburg 194354 (RU)
(74) Representative: Jeck, Anton
(86) International application number: PCT/RU2017/000207
(87) International publication number: WO 2018/139950

(57) **Abstract**

The invention is related to surgical and prosthetic dentistry, in particular to implantology, notably to devices for fixation of a dental prosthesis at the place of a lost tooth, more specifically to dental (teeth) implants.

An implant is proposed which consist of the basic component, the abutment and the connecting screw, where the abutmenth as a conical surface with a total angle of 7°-10° and with the cams that are located in the inter gingival area, whereas the screw has a thread pitch of 0.2±0.05 mm.

The implant has the increased resistance, especially when it is produced in the shape intended for the use in case of narrow prosthetic restorations.

## Description

### Field of the invention

The invention is related to surgical and prosthetic dentistry, in particular to implantology, notably to devices for fixation of a dental prosthesis at the place of a lost tooth, more specifically to dental (teeth) implants.

### Background of the invention

The dental implant is placed either directly in the socket or after the healing of the socket (delayed implantation). In the first case, during the healing phase the part of the implant will be located in the soft tissues. After placement of the dental implant its surface shall and will osseo integrate inside the jaw bone. Where after the implant placement the primary stability is not sufficient or where the patient has such risk factors as diabetes mellitus, smoking, etc., it is preferable to place the implant using the two-stage approach with closed healing and to proceed with the prosthetics after the osseo integration.

An implant can consist of one or two and more components. A two-component implant is typically used in cases of delayed implantation. This allows closing the soft tissues over the implant for a period of time required for healing.

The external design of most implants resembles a screw. This screw is driven in the upper or lower jaw after the bone site has been prepared. In the majority of cases, such a dental implant consists of a basic component that is placed in the bone tissue of the jaw, an abutment that is used for fixation of the crown, and a fixing screw that connects the abutment and the basic component.

Both the basic component and the abutment are usually made of metal or ceramic, in particular titanium, zirconium, titanium alloy, zirconium alloy, titaniferous alloy, ceramics zirconium oxides and aluminum. Additionally, silicon or silicon oxide based ceramics can be used that contains for example, nitrogen, hydrogen, carbon or tungsten.

Several hundred of patents in different countries deal with the structure of dental implants and particular aspects of their composing elements (RU 2602678, 2016; RU 2567596, 2014; RU 2485910, 2012; US 2005/0287497, 2005; WO 03020154, 2003. DE 10315399, 2004; EP 1728486, 2006; WO 97/20518,1997; WO 96/29020,1996, etc.).

For instance, according to the information contained in these patents the basic component is usually produced in the form of an appropriately shaped metalbody that consists of intrabony and extrabony components and has at its coronal end an insertion hole used for inserting the abutment. (The term "coronal" hereafter means the direction toward the crown or the fitted tooth; "cervical" means the direction toward the root of the tooth). At the cervical end, the basic component has an external thread that is used for fixing the implant in adequately prepared bone of the jaw implant bed. The thread maybe self-cutting as well as non-self-cutting. The construction of the thread located at the external part of the basic component usually provides high primary stability of the system and even transmission of the forces that appear during masticatory load on the dental implant on the bone of the jaw; however, its construction cannot always solve this issue. For example, a certain implant may have the basic component external thread pitch of approximately 0.6 mm (US 5588838, 1996). Such a construction does not provide for a safe fixation of the implant in the spongeous bone and cannot resist early masticatory load due to the low profile and small thread pitch of the basic component. The prosthetic restoration of such construction shall be carried out after 3 to 6 months following its placement, which results in the prolonged treatment time.

The abutment is made in such a way that allows for embedding the abutment in the insertion hole of the basic component. The abutment has the surface that can be used for direct or indirect fixation of the prosthetic restoration (for example, a crown) and the connection area that is used for the connection with the implant and is usually embedded in the abovementioned insertion hole of the implant. The abutment connection area has a conical part with a certain length of the cone that is adjacent in the cervical direction to the index area of a certain index length.

The connection area of the abutment and the corresponding matching internal area of the basic component of the implant assure improved mechanical connection of the elements and promote the formation of the tight seal to prevent a gap where liquids and bacteria can accumulate.

However, such conical constructions have a number of disadvantages. For example, the height may change during the forming of the implant due to the presence of the processing tolerances related to the angle and diameter of the cone.

Usually there is an index area on the surface of the abutment. This index area provides a possibility to reliably rotate and position the abutment and the basic component of the implant during the assembling of the implant and at the same time this surface can be used for gripping instrument penetration. Such index areas usually form a positive-fit connection in the circumferential direction with a contour that has a non-round shape, for example, like a polygon or an oval (RU 2273464, 2006; RU 2485910, 2013) or with grooves and cams.

The first option of indexing did not gain ground due to processing complexity during the production of the basic component and abutment that should have an irregular shape, taking into account relatively thin walls of the basic component of the implant and the increasing possibility that the connection of the components will not be sealed tight. More common is the use of the system of grooves and cams.

The selection of the connection between basic component and abutment is important. It shall be enough strong because it transfers the load from prosthetic restoration to the osseo integrated basic component of the implant. It can ensure the support of the implant structure and prevent fractures and loosening of the other components of restorations on the dental implants.

In the past, a connection pin was used in such connections. This pin projected above the surface of the basic component of the implant; the connecting part of the abutment was developed in such a way that it connected precisely over the connection pin. The connection of these parts was carried out with the help of a screw.

The disadvantages of such connection were the insufficient strength of the construction due to the possibility of pin fracture and technical complications related to the need of its replacement. Therefore in modern products the connection pins are transferred to the abutments and the connection is transferred inside the basic components of the implant. The connection in such constructions is mainly located inside the implant; it is conical and has an index to prevent the rotation of the abutment; wherein the surface of the connection between the implant and abutment is tilted inside the implant. In cervical direction the abutment has an index at its cervical end and the butt-end has a hole. Through this hole the abutment is connected to the basic component of the implant with the help of a specially selected connecting (fixing) screw. The fixing screw has a threaded part that is inserted through the abovementioned hole of the abutment and is screwed into the corresponding internal thread of the basic component. Due to this, the head of the screw presses the abutment down to the basic component. The length of the screw and the position of the thread on it are selected in such a way so that the screw of the abutment could not engage the thread in the implant until the cam butt end of the abutment at the cervical end is inserted in the platform of the implant. The screw tightening the before the abutment reaches the needed position prevents the fixing of the abutment in a wrong position.

The closest analogous solution is the dental implant (RU 2567596, 2015) that has the basic component with the insertion hole for the abutment at the coronal end, where the insertion hole in the direction from the coronal end has a conical part with a total cone angle ranging from 6° to 20°, preferably 15° and the index part of cylindrical shape that creates the guiding surface for the inserted abutment. The cylindrical part of the basic component has at least one groove in the radial direction to the outside; the cylindrical part of the abutment has the same number of cams; the grooves are made in such a way that they can engage the corresponding cam of the abutment and have the external diameter that is smaller or equal to the minimal diameter of the conical part. In the cervical direction the basic component has the threaded part that is adjacent to the index part and is used for placing the fixing screw.

The disadvantage of this construction is the processing complexity of the production of the basic element and of the abutment with changing surface geometry, insufficient strength of the abutment in the area where the index begins, as well as the need to make the walls of the basic component thinner when producing a narrow implant and placing the abutment with the cams in the inter gingival area of the implant, which is predetermined by the necessity of using the conical surface with high total angles.

The task to be solved by the author was to create an apparatus that would be more reliable in cases where narrow implants are produced and used.

### Essence of the invention

The claimed invention rests upon the author's modification of the connection between the basic component of the implant and the abutment. The importance of this area is defined by the fact that the implant-abutment connection determines the fixation of the abutment in the correct position in the mouth of the patient before the prosthetic restoration (for example, a crown) is produced in the dental laboratory for the further fixation over the abutment, and is typically used in this area to transfer the torque from the implant insertion instrument to the implant when placing the implant in the jaw of the patient.

This area consists of an index and a connecting screw. Traditionally connecting screws used in connections between an abutment and a basic component have the screw pitch from 0.2 to 0.5 mm per rev. The safe fixation of the abutment is provided by a certain number of operating strokes of the thread, where the thread functions only in case of productive turn (<90°), with self-centering functioning to the clamp load created by the connecting screw when being tightened between the abutment and the basic component. Assuming that three to four turns of the thread shall be productive, the height of the movement of the abutment in the basic component should be 0.6 mm or more, which would "squeeze" the connection out of the intergingival area and thus increase the probability of prosthesis fracture and/or compels the cervical end of the abutment to be made thinner in comparison with the cone.

In order to solve this problem the author proposes within the framework of the proposed technical result to decrease the screw pitch of the connecting screw to 0.2±0.05 mm, and to make the cams on a conical surface of the abutment in such a way so that the connection is located in the intergingival area of the jaw. Thus, the total angle of the conical surface is from 5° to 9°, the optimal one being 7°.

On the index part the abutment has conical surface, from this surface in the radial direction to the outside go at least one cam produced in such a way that it is possible to engage the corresponding grooves of the implant. The calculated surface has such tolerances that create the guiding surface for the index part of the implant when the abutment is placed in the implant.

The best results are obtained if one of the cams and the corresponding index are bigger in dimensions than the others, which will assure the precise predetermined position of the abutment in relation to the basic component. As a result, the abutment placement in the basic component assures in a simple and mechanically stable way a safe orientation of the correspondingly prepared abutment with the prosthetic restoration, thereby significantly reducing the duration of the patient's treatment session for the fixation of the abutment in the mouth, along with assuring high quality positioning of the prosthetic restoration.

The indexing areas of the basic component of the implant and abutment as well as conical areas of the implant and abutment are calculated and shaped in such a way that when the abutment is placed in the implant the conical areas at least partially contact between themselves and the indexing areas are engaged with one another. Owing to the contact between the conical areas at the level of the coronal edge, an extremely stable fixation of the abutment in the implant is achieved. A certain two-stage fixation occurs at the level of the upper coronal edge and in the zone of guiding surfaces between the grooves and the cams.

The aspects of the invention, when compared with the analogs, consist in carrying the connection between the abutment and basic component of the implant, especially for the creation of narrow implants. Their importance is defined by the fact that when implants are used in areas of single tooth defects with limited bone tissue available, it is possible either to carry out the augmentation procedure and place a stronger implant or to place an narrow diameter implant without the recourse to the augmentation procedure, which is preferable for the patient. However, the use of narrow diameter implants increases the risk of breaking the implant components some time later after the functional load begins.

To prevent the risk of fractures in the implant components, the invention makes use of a solution where narrow but very strong implants are used ranging from 3.4.to 3.8 mm in the diameter.

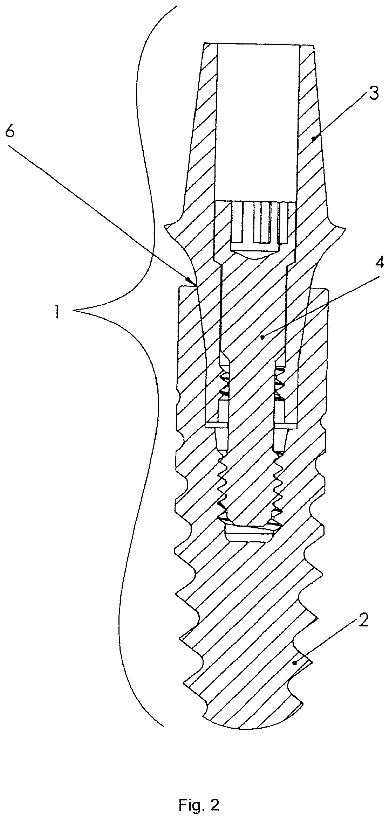

With a view to enhance the strength, the known narrow implant analogues are produced with thick-wall implants or thick-wall abutments. Some of them have either flat or conical connection, as shown in Figure 2. Within the conical connections guiding indexes are tilted cones, as the cone area makes for the sealing effect, which means that inside narrow cones the cone length is limited and in most cases insufficient.

Another option is a long cone, but with short guiding indexes. However, with narrow guiding indexes, the torque used for placing the implant is limited and the rotational tolerance between the implant and abutment will be big. The either case will result in diminished abutment strength.

The elements defining the strength of the connection are the connecting screw and its preload after the embedding. The higher the preload, the better and stronger is the connection. But if the preload is too high, it will lead to an increased risk of fractures. However, for the screw to be as strong as possible, the diameter of the screw core is to be as high as possible. However, if the diameter of the screw is too high, the wall thickness of the abutment and the implant is to be reduced, leading to the increased risk of fracture of implants under load. Within the framework of the invention, it is proposed that a core diameter of the screw be left without changes, but at the same time the outer diameter of the screw be reduced owing to the substantial decrease in the thread pitch.

Typically, for narrow implants a M1.6 thread is used with a pitch of 0.35 mm. To preserve the core diameter of the screw and reduce its nominal diameter, which would allow for a bigger size implant, an innovational approach can be used with the thread pitch reduced to 0.2±0.025mm. This will enable obtaining the optimal outer diameter of 1.4±0.05 mm where the core diameter is equal to that of the screw with the diameter of 1.6 mm and the thread pitch of 0.35 mm. It has been discovered that for the implant with outer diameter from 3.5 to 3.8 mm the most solid combination of the dimensions is an option when the diameter of the abutment insertion hole of the basic component is 2.8±0.2 mm and the outer diameter of the abutment at the area of implant shoulder and its insertion in the basic component is 2.8±0.1 mm (Figure 2). This will allow for the use of a long cone with the guiding indexes in the middle, which will enable immaculate transfer of the load from the abutment to the implant. In so doing, the abutment will incorporate both the upper and the lower conical areas situated below the guiding areas. Subsequently, the abutment will be stabilized over and under the guiding areas inside the implant when it is affected by additional axial loads. This will make for rather small guiding areas with a simultaneous long conical connection, thereby providing conditions for the strength of the narrow implant. The research has established that the cone angles to be used in the implant-abutment connection ranging from 5° to 10° (optimum 8°) will provide the highest bond strengthunder such conditions.

### Brief description of the drawing figures

Further on, the invention is explained in a greater detail in the accompanying embodiments and drawings:

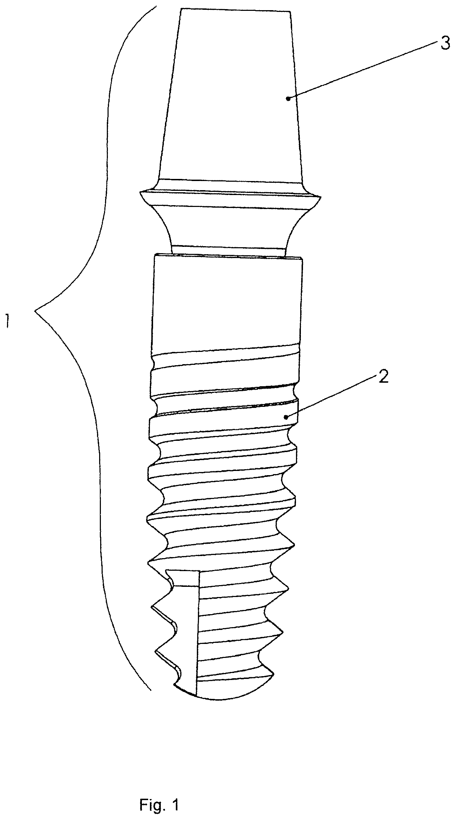

- Figure 1: shows a typical tooth implant (1) including an basic component implant (2) and abutment (3) in the assembled condition.
- Figure 2: shows a cross-section of the tooth implant from Figure 1, which also has a connecting (fixing) screw (4).

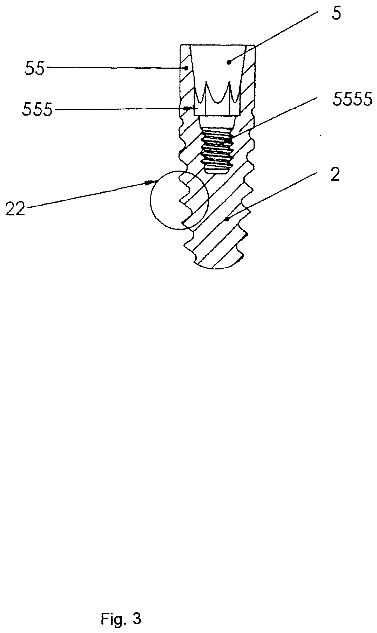

- Figure 3: shows a tooth implant (2) with external thread (22) and internal fixation (5). The internal fixation (5) shows the conical portion (55), and the guide area with an internal thread (555). The conical area (55) is located above the area with guides (555) and the thread area (5555).

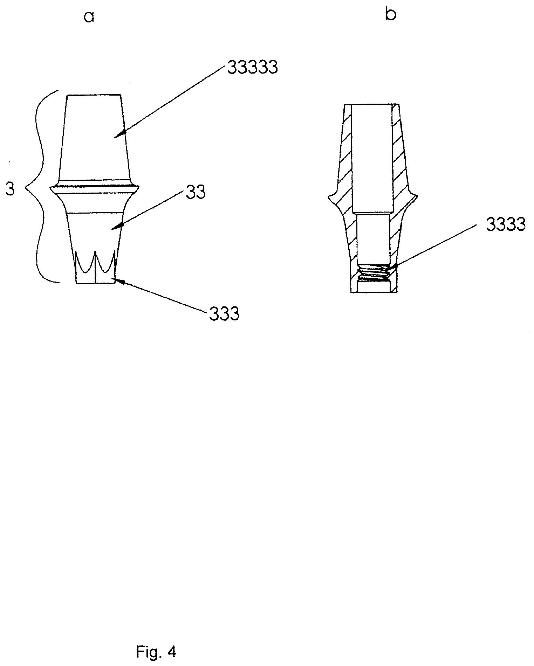

- Figure 4: shows an abutment (3) that has a conical contact pin (33) and area guides (333). The inner opening(3333) is meant for the fixing screw to be placed inside the implant. Orthopedic components (e.g. crowns or bridges) are placed on the upper contact pin (33333).

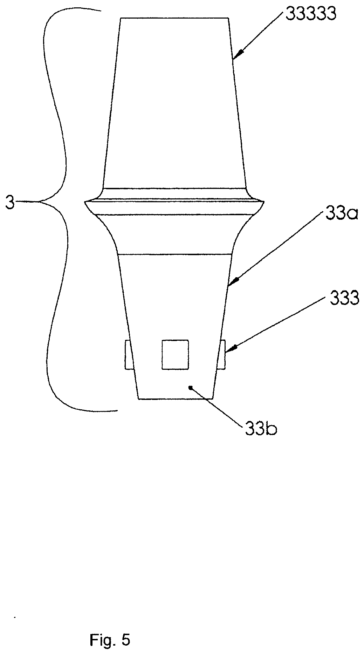

- Figure 5: shows an abutment scheme for guide grooves of different dimensions that has a conical contact pin (33) and the guide area (333). The inner opening(3333) is meant for the fixing screw to be placed inside the implant. The abutment (3) inside includes an upper conical area (33a) and a lower conical area (33b), which will be below the area of the guide (333)

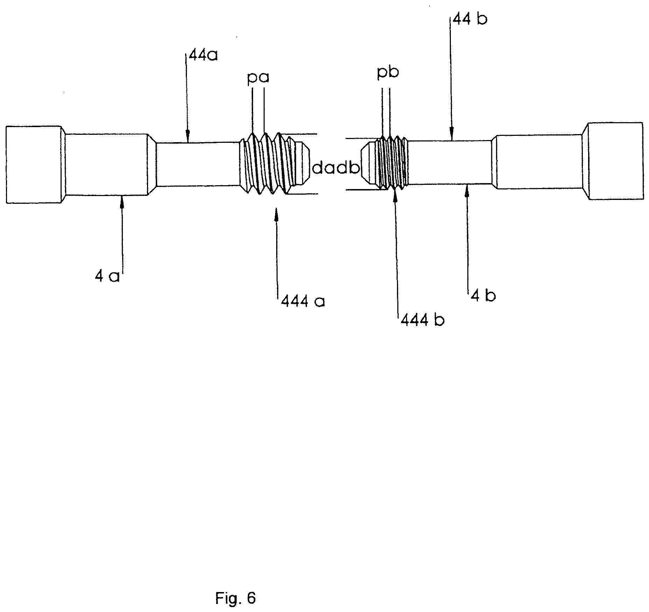

- Figure 6: compares the two thread options. Screw 4a is a standard screw with thread 444a, M1.6, core diameter 44 and thread pitch size 0.35. The screw 4b has the same diameter 44b as 4a does, with the core diameter 44a.

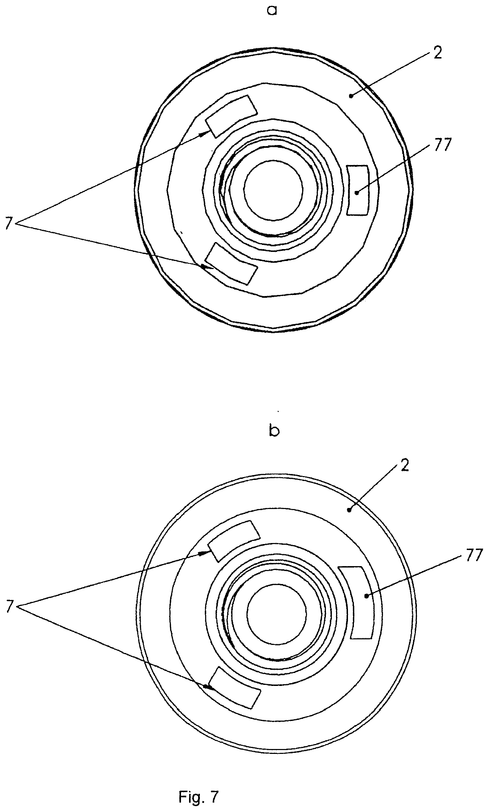

- Figure 7: is the view of the basic component of the implant (2) from above. Three indexes are shown inside the cone. In Figure 7a, the indexes 7 and 77 are of the same size. In Figure 7b, two indexes 7 are of the same size and one index 7 is of a bigger size.

### Industrial applicability

The placement of a dental implant 1 in patient's mouth provides that, at the first stage of treatment, basic component 2 be positioned in the jaw bone. To this end, basic component 2 is equipped with screw-thread 22, enabling the placement performed by screwing. For this embodiment, thread 22 is formed as a self-cutting thread. In this step, thread 22 can be made uniform or variable, and owing to appropriate choice of the parameters different possible biological factors, etc.can also be taken into account with due regard for the various nature of the implantation. In so doing, design and parameters of thread 22 are calculated, with special regard for the desired high primary stability and a uniform transmission of forces arising from the chewing load of the dental implant to the jawbone. In combination with the suitably shaped conical, self-locking connection is manifested when the abutment is inserted into the implant. Thus, additional connection stability is secured.

The device works in the following way.
After implanting the basic component 2 into the jaw bone, a period of four weeks to six months is envisaged, during which the basic component is to grow into the tissue and jawbone.

At the second stage, abutment 3may be placed, with the dental prosthetic element seated on it. In case of a particularly favorable behavior of the bone and the corresponding high primary stability, abutment 3 and other prosthetic components can be mounted immediately after the installation of the basic component or the implant. To establish in a relatively simple manner a mechanically stable connection between basic component 2 and abutment 3, a contact pin 33 is formed on abutment 3, which during the assembly of the basic component 2 is set in the recess in basic component 2, forming a channel for receiving connecting (fixing) screw 4. The mechanical connection of basic component 2 to abutment 3 is carried out with the corresponding connecting screw 4, external thread 444 of which is scre-wed into internal thread 5555 provided in basic component 2. In so doing, head of connecting screw 4 presses abutment 3 to basic component 2.

## Claims

1. A dental implant to be fitted in jaw bone, consisting of a basic component, an abutment and a connecting screw, where on the coronal end of the basic component of the implant an insertion hole is positioned for an abutment that has, in the direction from the coronal end, a conical index site forming a guide surface for the abutment, in whose surface at least one radially extending outward groove sare located that are performed in such a way so as to be able to engage with the cams of the abutment, and in the cervical direction the threaded area is immediately adjacent to the index area for the connection screw to be imbedded; the abutment contains a connecting area for connection with the implant basic component which has a conical area, to which an index area is adjacent in the cervical direction and calculated in such a way that it forms a guide surface for the surface portion of the index of the basic component of the implant when the abutment is set into the implant, while from said surface at least one cams extend radially outwardly that are configured to engage the corresponding slots of the basic component of the implant, and on the cervical end the abutment has a butt-end surface with a hole through which the threaded portion of the connecting screw can be inserted; at that, the index and conical portions of the basic component of the implant and the abutment are formed in such a way that when the abutment is embedded, the conical portions are at least partially contiguous, and the index portions are in engagement, in so doing every pair of the implant basic component and its corresponding abutment contact one another in the conical portions adjacent to the coronal butt end of the implant basic component where the connecting screw is seated in the way which prevents it from engagement with the screw-threaded basic component of the implant, if, with its butt surface of the cam being in an intermediate position, the abutment lies on the surface of the implant basic component platform whose distinguishing feature is the connecting thread which has a pitch of 0.2±0.05 mm, and the cams are formed on the conical surface of the abutment in such a way that the connection is positioned inside the gingiva.

2. The dental implant is as in Clause 1, the distinction is that out of the three indexes inside the cone of the basic component of the implant one is of bigger dimensions than the other two.

3. The dental implant is as in Clause 1, the distinction is that the total angle of the conical surface ranges from 5° to 9°.

4. The dental implant is as in Clause 3, the distinction is that the total angle of the conical surface is 7°.
